Europäisches Patentamt

European Patent Office

Office européen des brevets

(19)

(11) EP 0 654 483 B1

(12) **FASCICULE DE BREVET EUROPEEN**

(45) Date de publication et mention
de la délivrance du brevet:
**09.06.1999 Bulletin 1999/23**

(51) Int Cl.⁶: **C08B 37/00**, C08B 30/18,
A23L 1/308

(21) Numéro de dépôt: **94402634.3**

(22) Date de dépôt: **18.11.1994**

(54) **Procédé de purification d'un polymère soluble hypocalorique du glucose et produit ainsi obtenu**

Verfahren zur Reinigung von einem hypokalorischen, löslichen Polymerisat von Glukose, und so hergestelltes Produkt

Process for purifying a hypocaloric soluble glucose polymer and product so obtained

(84) Etats contractants désignés:
**AT BE CH DE DK ES GB IT LI NL SE**

(30) Priorité: **22.11.1993 FR 9313943**

(43) Date de publication de la demande:
**24.05.1995 Bulletin 1995/21**

(73) Titulaire: **Roquette Frères**
**62136 Lestrem (FR)**

(72) Inventeur: **Duflot, Pierrick**
**F-62136 Richebourg (FR)**

(74) Mandataire: **Boulinguiez, Didier et al**
**Cabinet Plasseraud**
**84, rue d'Amsterdam**
**75440 Paris Cedex 09 (FR)**

(56) Documents cités:
EP-A- 0 368 451          EP-A- 0 473 333
US-A- 4 965 354

- DATABASE WPI Week 8512, Derwent Publications Ltd., London, GB; AN 85-072246 & JP-A-60 027 365 (NIPPON SHOKUHIN) 12 Février 1985
- PATENT ABSTRACTS OF JAPAN vol. 12, no. 33 (C-472) 30 Janvier 1988 & JP-A-62 180 787 (ISHIMURA FUMIHIRO) 8 Août 1987
- PATENT ABSTRACTS OF JAPAN vol. 6, no. 169 (C-122) 2 Septembre 1982 & JP-A-57 086 283 (SATO SHOKUHIN KOGYO KK) 29 Mai 1982
- "Food Chemical Codex", 01.07.1996, 4th ed., pp. 297, 117, NATIONAL ACADEMY PRESS, WASHINGTON

**Description**

La présente invention est relative à un procédé de purification d'un polymère soluble hypocalorique du glucose. De façon plus précise, elle est relative à un procédé de purification d'un polydextrose ou d'un polyglucose ou d'une pyrodextrine consistant à traiter le polydextrose, ou le polyglucose, ou la pyrodextrine à l'aide de glucose oxydase et d'un échangeur d'anions sous forme hydroxyle OH⁻.

On sait que le glucose, éventuellement mélangé à des polyols, peut être polymérisé à chaud en présence d'acides minéraux ou carboxyliques selon des procédés qui ont été décrits par exemple dans les brevets américains n° 2 436 967, 2 719 179 et 4 965 354 pour ce qui concerne les acides minéraux ou n° 3 766 165 et 5 051 500 pour ce qui concerne les acides carboxyliques.

Les polyglucoses solubles obtenus, composés majoritairement de liaisons glucose-glucose 1-6 et de liaisons atypiques glucose-glucose 1-2, 1-3, sont peu digestibles.

Leur faible valeur calorique, dont on s'accorde à penser qu'elle est voisine de 4,18 kilojoules/gramme (soit 1 Cal/g), et leurs propriétés technologiques voisines de celles du saccharose en font des prétendants au remplacement de ce sucre en tant qu'agents de charge, produits inertes très recherchés comme fibres diététiques. Ils possèdent aussi des propriétés physiques qui leur permettent de se substituer à certaines matières grasses et d'abaisser ainsi radicalement leur pouvoir calorique.

Toutefois, les propriétés organoleptiques des polymères ainsi obtenus ne leur permettent pas de trouver un emploi aussi universel que possible dans les produits alimentaires.

Ces polymères bruts sont en effet toujours colorés ou acides ou amers, ce qui ne permet pas de les employer en remplacement total du sucre ou des matières grasses et ce qui restreint leur application aux produits tels que les jus de fruits développant déjà une certaine coloration, acidité et amertume.

En outre, la présence de glucose libre et à un moindre degré de sorbitol libre dans ces polymères bruts, fait que ces produits ne sont pas aussi peu caloriques que possible.

La persistance de glucose ou de sorbitol libres dans ces polymères occasionne aussi d'autres inconvénients tels que l'existence d'un goût sucré, incompatible avec les matières grasses et entraîne par ailleurs un abaissement de la viscosité et de l'humidité relative d'équilibre des polymères obtenus ou des produits dans lesquels ils sont incorporés en tant que succédanés du sucre.

De nombreuses tentatives ont déjà été effectuées pour procurer à ces polymères les qualités qui leur manquent.

C'est ainsi qu'on a proposé de purifier le polydextrose (polymère de glucose ou polyglucose obtenu le plus généralement par condensation de glucose en présence de sorbitol et d'acide citrique) en le décolorant à l'aide de peroxydes puis en le précipitant par des solvants organiques de manière à le libérer du glucose, du sorbitol et de l'acide citrique libres ainsi que du lévoglucosan qui lui procurerait un goût amer. Ce procédé a été exposé dans le brevet américain n° 4 622 233. Toutefois, les quantités de solvant à mettre en oeuvre sont énormes et le procédé ne donne donc pas satisfaction sur le plan de l'économie et de la sécurité.

Un autre procédé de purification du polydextrose, exposé dans la demande de brevet européen n° 289 461, consiste à en enlever les impuretés colorées et amères par extraction à l'aide de solvants organiques mais sans précipiter le polymère. Dans ce cas également les quantités de solvant à mettre en oeuvre sont énormes et ce procédé souffre donc des mêmes inconvénients d'économie et de sécurité.

La demande de brevet européen n° 342 156 propose d'éliminer les composés de faible masse moléculaire présents dans le polydextrose brut et qui sont essentiellement le glucose, le sorbitol, l'acide citrique et le lévoglucosan par osmose inverse et diafiltration. Le procédé est coûteux car il nécessite cette fois énormément d'eau pour pratiquer l'osmose puis la diafiltration et en outre les grosses molécules fortement colorées ne s'éliminent pas et contribuent au mauvais aspect du produit obtenu.

La demande de brevet européen n° 380 248 propose de traiter le polydextrose par des résines adsorbantes ou anioniques faibles de façon à abaisser sa teneur en acide citrique libre et estérifié et prétend ainsi en améliorer le goût. Le produit obtenu contient toutefois toujours des composés caloriques de faible poids moléculaire tels que le glucose et le sorbitol et il n'est pas dénué de toute amertume ni de coloration.

La demande de brevet européen n° 458 748 propose un procédé similaire au précédent, mettant en oeuvre des celluloses anioniques et conduit aussi à un produit présentant les mêmes inconvénients.

La demande de brevet européen n° 473 333, par un procédé mettant en oeuvre plusieurs résines échangeuses d'ions de fonctionnalités différentes, prétend abaisser à la limite de la détection les teneurs résiduelles en acide citrique libre et estérifié du polydextrose et affirme obtenir ainsi un produit d'amertume réduite. Cependant, le produit obtenu contient toujours des composés caloriques de faible poids moléculaire tels que le glucose et le sorbitol et il est encore coloré. Ce polydextrose particulier est commercialisé par la société PFIZER sous la marque LITESSE[R] II.

La demande de brevet PCT WO 92/12179, par un procédé de tamisage moléculaire sur résines cationiques retenant les composés de faible poids moléculaire, permet d'obtenir un produit similaire à celui obtenu par le procédé exposé dans la demande de brevet européen n° 342 156 déjà citée plus avant. Mais tout comme dans cette demande de brevet, le procédé est coûteux puisque le tamisage moléculaire exige une grande quantité d'eau. Par ailleurs, les grosses molécules fortement colorées ne sont pas non plus séparées du polymère et contribuent au mauvais aspect du produit obtenu.

La demande de brevet PCT WO 92/14761 propose un polydextrose ou un polyglucose (polymère soluble hypocalorique du glucose obtenu par l'action d'acides minéraux sur le glucose) ne contenant que peu de groupements de glucose réducteurs. Un tel produit est obtenu notamment par hydrogénation catalytique d'une solution de polydextrose ou de polyglucose. Le produit obtenu est peu coloré mais n'est pas aussi peu calorique que possible car il contient du sorbitol provenant de l'hydrogénation du glucose libre contenu dans le polydextrose ou le polyglucose en plus du sorbitol libre déjà présent dans le polydextrose.

La demande de brevet européen n° 368 451 propose de traiter une pyrodextrine par une enzyme d'hydrolyse de l'amidon telle que l'alpha-amylase dans le but de la désodoriser et de lui enlever son mauvais goût afin qu'elle puisse servir de fibre diététique. Une pyrodextrine est un polymère soluble hypocalorique du glucose obtenu par grillage à sec de l'amidon contenant comme le polyglucose ou le polydextrose des liaisons atypiques glucose-glucose 1-2 et 1-3, mais contenant majoritairement les liaisons classiques 1-6 et surtout 1-4 de l'amidon, rendant ce produit digestible à hauteur de 50 % environ, lui conférant donc une valeur calorique de 8 KJoules/gramme (soit 2 Cal/g).

Le brevet américain US 5 094 951 décrit la production de glucose oxydase par une levure génétiquement recombinée : Saccharomyces cerevisiae. La glucose oxydase (EC 1.1.3.4) est l'enzyme qui catalyse l'oxydation du glucose en acide gluconique avec production concomitante de peroxyde d'hydrogène. Cette enzyme a des applications industrielles nombreuses parmi lesquelles on peut retenir son utilisation pour ôter le glucose du blanc ou du jaune d'oeuf avant de les sécher et ceci dans le but d'éviter les réactions de brunissement de MAILLARD, pour enlever le glucose résiduel des sirops à haute teneur en fructose, pour éliminer l'oxygène dissous contenu dans les boissons, les produits alimentaires humides, les parfums lorsque ceux-ci sont contenus dans des emballages étanches et pour doser le glucose dans des produits industriels et dans les fluides biologiques tels que le sang et l'urine.

La demande de brevet japonais publiée sous le numéro JP 57 086 283 décrit un procédé permettant de diminuer la perception de goût sucré d'une maltodextrine. Enfin la demande de brevet japonais publiée sous le numéro JP 62 180 787 décrit l'immobilisation d'une enzyme telle que la glucose oxidase et l'utilisation de l'enzyme immobilisée pour oxyder le glucose en acide gluconique, modifiant ainsi le goût des produits alimentaires le contenant.

Consciente qu'il existe un intérêt croissant pour les fibres alimentaires solubles de bonne qualité, peu colorées, aussi inspides et aussi peu caloriques que possible, la société Demanderesse a conduit de nombreuses recherches dans le but de mettre au point un procédé économique permettant d'obtenir une telle qualité de fibres.

D'une manière extrêmement simple et particulièrement efficace au regard de tout ce qui a été proposé à ce jour, la société Demanderesse a constaté que de telles fibres pouvaient facilement être obtenues en soumettant un polymère soluble hypocalorique du glucose à un procédé de purification comprenant l'action d'une glucose oxydase puis le traitement du produit obtenu par un échangeur d'anions sous forme hydroxyle OH⁻.

Malgré sa simplicité, le procédé proposé permet de façon surprenante de décolorer fortement les polymères solubles de glucose et de leur ôter pratiquement totalement leur goût âcre et de brûlé. Il contribue en outre, par l'élimination du glucose libre, à abaisser le contenu calorique des fibres solubles obtenues, ainsi qu'à améliorer leur stabilité thermique et à augmenter leur viscosité et humidité relative d'équilibre.

La Demanderesse suppose que la production de peroxyde d'hydrogène et l'apparition d'oxygène naissant se produisant lors de l'oxydation du glucose en acide gluconique pourrait jouer un rôle dans ce phénomène. Les oxydants tels que l'eau oxygénée, le peroxyde de benzoyle ou le chlorite de sodium ont en effet déjà été employés pour décolorer du polydextrose avant de le précipiter par des solvants comme il a déjà été indiqué dans le brevet américain US 4 622 233.

Bien que le produit obtenu par le traitement à la glucose oxydase ne paraisse absolument pas décoloré, la Demanderesse a remarqué que le traitement subséquent sur échangeurs d'anions permettait de le décolorer beaucoup plus facilement que s'il n'avait pas subi ce traitement enzymatique. En outre, l'échange d'anions qui a lieu sur l'échangeur, permet de fixer l'acide gluconique qui s'est formé aux dépens du glucose, le traitement enzymatique combiné à l'échange d'anions contribuant ainsi à l'abaissement du contenu calorique du polydextrose ou du polyglucose ayant subi ce traitement. Un autre avantage du procédé selon l'invention et résidant dans l'élimination du glucose libre, est qu'il permet d'obtenir des produits qui ne sont pas cariogènes lorsqu'il s'agit de bonbons par exemple ou des margarines hypocaloriques dénuées de goût étranger lorsque l'on emploie ce produit en substitution partielle des matières grasses.

Cette diminution de la teneur en glucose libre des produits obtenus a aussi pour conséquence une augmentation de la masse moléculaire moyenne, tant en poids qu'en nombre (Mw et Mn) des polymères obtenus et contribue à leur conférer une hygroscopicité moindre et à augmenter leur stabilité thermique, leur viscosité et leur humidité relative d'équilibre.

Le procédé proposé par la présente invention peut comprendre aussi des modes de réalisation encore plus préférés qui consistent par exemple à soumettre :

- préalablement à sa purification selon le procédé de l'invention, le polymère soluble hypocalorique du glucose à l'action d'enzymes d'hydrolyse de l'amidon. Cette hydrolyse enzymatique préalable qui peut aussi être effectuée en présence de la glucose oxydase, permet d'obtenir des polymères solubles particulièrement peu caloriques, absolument acariogènes et d'un poids moléculaire particulièrement élevé,

- postérieurement à sa purification selon le procédé de l'invention, le polymère soluble hypocalorique du glucose à une hydrogénation catalytique. Cette hydrogénation catalytique postérieure permet d'obtenir des polymères solubles qui sont particulièrement peu colorés, stables à la chaleur et absolument neutres au point de vue du goût et de l'odeur.

Bien entendu, ces traitements complémentaires peuvent être effectués tous les deux, apportant ainsi leurs contributions respectives aux qualités des produits obtenus.

Le procédé de l'invention permet de purifier et d'améliorer fortement le polydextrose lorsque c'est ce produit qui est mis en oeuvre mais la Demanderesse préfère toutefois l'appliquer à un polyglucose obtenu uniquement à l'aide de glucose et d'acide minéral.

De tels polymères du glucose ne sont pas commercialisés à la connaissance de la Demanderesse mais sont préférés comme matière première dans le cadre de l'obtention des produits selon l'invention. Ils sont en effet obtenus de façon très économique.

Ces polyglucoses présentent une coloration et un goût beaucoup plus prononcés que le polydextrose mais le procédé de l'invention permet de façon surprenante de s'accommoder aisément de ce handicap. Ces polyglucoses ont cependant l'avantage de ne pas contenir de sorbitol libre contribuant à la caloricité du produit, sorbitol libre qui ne serait pas éliminé par le procédé de l'invention.

Ces polymères sont commodément obtenus par chauffage et fusion de dextrose (glucose cristallisé) en présence de 5 à 500 parties par million en poids d'acide sulfurique. Ce mélange fondu est alors maintenu à une température comprise entre 140 et 195°C, sous pression réduite de façon à éliminer l'eau réactionnelle et cette cuisson est poursuivie jusqu'à l'obtention d'un DE (dextrose équivalent) compris entre environ 6 et 15.

Ce pouvoir réducteur résiduel est dû à la présence de glucose libre dans le polymère mais aussi à l'existence d'extrémités réductrices hémiacétaliques présentes en bout de chaîne du polymère ainsi formé.

Lorsque l'on fait appel à un procédé plus préféré de l'invention qui, préalablement aux étapes d'oxydation enzymatique et de désacidification-décoloration sur échangeurs d'anions ou simultanément à l'étape d'oxydation enzymatique et préalablement à l'étape de désacidification-décoloration sur échangeur d'anions, met en oeuvre une étape d'hydrolyse du polymère de glucose à l'aide d'enzymes d'hydrolyse de l'amidon, on peut utiliser l'alpha-amylase, l'amyloglucosidase, l'iso-amylase, la pullulanase, la bêta-amylase, ces enzymes étant employées seules, successivement ou en mélange. On préfère pour des raisons de coût, de simplicité et d'efficacité ne faire appel qu'à l'amyloglucosidase.

Les quantités et les conditions d'action des différentes enzymes éventuellement utilisées pour cette étape d'hydrolyse enzymatique préliminaire des polymères de glucose sont par exemple les suivantes et sont généralement celles qui sont recommandées pour l'hydrolyse de l'amidon :

- amyloglucosidase : 4000 à 400 000 unités internationales, température de 50 à 60°C, durée d'action de 30 à 72 heures, pH de 5.0 à 6.0,
- alpha-amylase : 20 à 2000 unités KNU (kilo Novo Units) par kilogramme de substrat sec, température de 50 à 60°C, durée d'action 16 à 30 heures.

Les enzymes utilisées peuvent être de nature bactérienne, fongique ou végétale.

Lorsqu'un autre procédé plus préféré de l'invention fait appel, postérieurement aux étapes d'oxydation enzymatique et de désacidification-décoloration sur échangeurs d'anions, à une étape d'hydrogénation catalytique du polymère de glucose, on effectue de préférence cette hydrogénation à l'aide de nickel de Raney, à une température voisine de 130 à 140°C, à un pH compris entre 4,0 et 8,0, de préférence voisin de 7,0, sous une pression d'hydrogène comprise entre 20 et 200 bars, de préférence voisine de 50 bars.

L'hydrogénation dont la durée est inversement proportionnelle à la quantité de catalyseur mise en oeuvre, est conduite à une concentration de la solution aqueuse du polymère de glucose qui est comprise entre 20 et 75 %, de préférence voisine de 40 % jusqu'à l'obtention d'un pourcentage de sucres réducteurs résiduels inférieur à 0,5 %, de préférence inférieur à 0,25 % et de façon encore plus préférée, inférieur à 0,15 %.

Les extrémités hémiacétaliques présentes en bout de chaîne du polymère se trouvent alors réduites en fonctions alcool-primaires et on trouve donc en bout de polymère des molécules de sorbitol qui y sont liées de façon covalente et qui ne participent pas en tant que telles au contenu calorique ou à l'abaissement des poids moléculaires des polymères obtenus. Cette quasi-absence de sucres réducteurs résiduels confère une très grande stabilité thermique aux polymères ainsi obtenus.

Après l'hydrogénation, le produit est déminéralisé pour enlever les traces de nickel soluble et les acides qui se sont formés par la réaction parasite de CANNIZARRO.

Pour ce qui concerne le procédé plus généralement revendiqué de purification du polymère soluble de glucose faisant appel à une étape d'oxydation enzymatique suivie d'une étape de désacidification-décoloration sur échangeur d'anions, on préfère utiliser pour l'oxydation enzymatique, une composition enzymatique brute de glucose oxydase contenant aussi de la catalase.

La glucose oxydase catalyse la réaction suivante :

$$\text{Glucose} + O_2 + H_2O \text{ ------>} \text{acide gluconique} + H_2O_2$$

La catalase transforme l'eau oxygénée ainsi produite selon la réaction :

$$H_2O_2 \text{ ------------>} H_2O + 1/2\ O_2$$

Une telle composition enzymatique est par exemple disponible auprès des établissements NOVO, DANEMARK sous la dénomination SP 358.

Cette oxydation enzymatique doit se dérouler dans un milieu aéré et le pH d'un tel milieu est de préférence maintenu à une valeur comprise entre 3,5 et 8,0, de préférence entre 4,0 et 7,0 et encore plus préférentiellement entre 5,0 et 6,0.

La concentration en polymère de glucose n'est pas critique et peut varier de 5 à 75 %. Toutefois, les concentrations élevées en polyglucose imposent de travailler en régulant le pH à l'aide d'une base ou en effectuant l'oxydation en présence d'un sel tampon tel que le carbonate de calcium. La stabilisation du pH à une valeur comprise entre 5,0 et 6,0 a cependant l'avantage de permettre l'action conjointe d'une amyloglucosidase mais dans ce cas, il conviendra d'éliminer par la suite ces cations soit en les précipitant et en les filtrant sous forme de sel d'oxalate insoluble par exemple, soit en les fixant sur un échangeur de cations. Pour des raisons économiques, on préfère cependant effectuer l'oxydation sur des solutions aqueuses contenant environ 30 à 50 % de matières sèches. La température peut être ajustée dans une large gamme variant de 15 à 70°C mais pour des raisons de commodité on préfère travailler vers 30 - 40°C, températures auxquelles l'enzyme se montre la plus active. Lorsqu'on effectue l'oxydation enzymatique en même temps que l'hydrolyse enzymatique à l'amyloglucosidase, on peut préférer travailler vers 50° à 60°C, températures auxquelles l'amyloglucosidase est la plus active bien qu'elles soient limites pour ce qui concerne la dénaturation rapide de la glucose oxydase et la teneur en oxygène dissous des solutions soumises à hydrolyse.

Un matériel commode permettant d'effectuer cette oxydation consiste en un fermenteur aérobie bien qu'il ne soit nullement nécessaire que cette étape se déroule dans des conditions stériles ni même rigoureuses d'aseptie. La quantité d'enzymes mise en oeuvre est telle que l'oxydation se déroule en 0,5 à 24 heures.

Pour ce qui concerne le seconde étape du procédé plus généralement revendiqué de purification du polymère soluble de glucose on utilise comme échangeur d'anions une résine anionique forte qui permet de fixer efficacement les acides faibles que sont l'acide gluconique ou d'autres produits acides d'oxydation du glucose qui ont pu apparaître notamment lors du chauffage à haute température de celui-ci. Ces résines anioniques fortes permettent également de retenir très efficacement les acides carboxyliques faibles qui auraient pu être employés comme catalyseurs de la polymérisation du glucose, par exemple l'acide citrique dans le cas du polydextrose.

Les résines préférées sont celles qui portent des groupements fonctionnels du type amine quaternaire et encore plus préférentiellement des groupements triméthylamine quaternaire telles que la résine AMBERLITE IRA 900 commercialisée par ROHM and HAAS.

Ces résines sont utilisées sous leur forme hydroxyle ou base forte $OH^-$.

Pour augmenter leur rendement de régénération avec les alcalis, on peut préférer les coupler avec une résine anionique faible essentiellement porteuse de groupements aminés tertiaires telle que l'AMBERLITE IRA 93 de la même société.

Dans le cas préféré où l'étape d'oxydation enzymatique a été effectuée en présence d'un sel tampon ou d'une addition progressive de base par régulation du pH, on préférera éliminer d'abord les cations par précipitation ou échange d'ions comme il a déjà été dit. On emploiera dans ce dernier cas une résine cationique forte comportant des groupements sulfonés telle que l'AMBERLITE IR 200C, utilisée sous sa forme acide $H^+$ et cette étape d'échange de cations sera donc intercalée entre l'étape d'oxydation enzymatique et l'étape de désacidification.

Bien entendu, dans tous les cas, les propriétés organoleptiques et la coloration résiduelle des produits obtenus peuvent encore être améliorés par des traitements complémentaires à l'aide de noir animal ou végétal.

L'invention ayant été exposée dans ses grandes lignes afin d'en révéler la portée, les exemples qui suivent et qui ne figurent que dans un but d'illustration visant à mieux la faire comprendre ne doivent pas être interprétés d'une façon qui réduirait cette invention à ces seuls exemples détaillés.

## EXEMPLE 1 (PREPARATION DU POLYMERE DE GLUCOSE) :

Dans un réacteur en acier vitrifié muni d'un agitateur et d'une double enveloppe thermostatable, on a introduit 500 kgs de dextrose anhydre et 25 litres d'eau.

On a chauffé la double enveloppe jusqu'à dissolution complète du dextrose puis on a ajouté 10 grammes d'acide sulfurique concentré, dilué dans un peu d'eau. On a alors fermé le réacteur que l'on a ensuite dépressurisé pour porter progressivement la température de son contenu jusqu'à 155°C. L'opération a nécessité 8 heures environ jusqu'à l'obtention d'un Dextrose Equivalent égal à 11,9.

La pâte ainsi obtenue, très brune et à forte odeur de caramel a été reprise dans de l'eau chaude pour en former une solution titrant environ 40 % de matières sèches.

La densité optique d'une solution à 40 % de polymère, mesurée à 420 nm en cellule de 1 cm s'élevait à : 0,405. Cette même solution présentait un goût très prononcé de brûlé et était très âcre.

## EXEMPLE 2 (COMPARATIF) :

La solution à 40 % de polymère de glucose obtenue à l'exemple 1 a été déminéralisée et décolorée à température ambiante sur une batterie de résines échangeuses d'ions comprenant en série une résine cationique forte IR 200C puis une résine anionique forte IRA 900. On notera ici que la résine cationique forte est sans intérêt pour ce qui concerne l'aspect de la déminéralisation des polymères, ceux-ci ne contenant à ce stade aucun cation. Elle a cependant été utilisée de manière à ce que les exemples soient rigoureusement comparables entre eux, ces résines cationiques exerçant en effet une légère action décolorante. On a mis fin à cette déminéralisation-décoloration lorsque la résistivité des solutions est tombée à une valeur inférieure à 10.000 ohms.cm.

La solution de polymère ainsi obtenue a été concentrée puis atomisée pour former une poudre jaune de goût amer ayant une densité optique de 0,160 mesurée dans des conditions identiques à celles de l'exemple 1.

Elle montrait l'analyse physico-chimique suivante :

| Dextrose Equivalent | 11,9 |
|---|---|
| Glucose libre | 5,2 % |
| Mw | 1620 |
| Mn | 730 |

## EXEMPLE 3 (PRODUIT SELON L'INVENTION) :

La solution à 40 % de polymère de glucose obtenue à l'exemple 1 a été soumise à l'action de la glucose oxydase à raison de 6250 unités GOX de glucose oxydase SP 358 par kilogramme de substrat sec. Cette réaction s'est déroulée en cuve aérée à raison de 1,5 volume d'air par volume de solution et par minute, à un pH régulé à 5,0 par addition progressive de soude.

Elle a eu lieu à 35 °C durant 16 heures au terme desquelles la teneur en glucose libre était devenue inférieure à 0,2 %. A ce stade, la solution de polymère montrait une densité optique de 0,52 pour une solution à 40 % de matières sèches. Cette densité optique était donc plus élevée que celle de la solution obtenue à l'exemple 1. On pouvait toutefois déjà constater que son âcreté et son goût de brûlé avaient fortement diminué.

Cette solution a été traitée sur la même batterie d'échangeurs d'ions que celle décrite dans l'exemple 2 jusqu'à la même valeur de résistivité. Elle a ensuite été concentrée puis atomisée pour former une poudre jaunâtre ne possédant qu'une très vague amertume et dont la densité optique d'une solution à 40 % de matières sèches ne s'élevait qu'à 0,131.

L'analyse physico-chimique de la poudre obtenue était la suivante :

| Dextrose Equivalent | 7,55 |
|---|---|
| Glucose libre | 0,2 % |
| Mw | 1660 |
| Mn | 835 |

## EXEMPLE 4 (PRODUIT SELON L'INVENTION AVEC TRAITEMENT D'HYDROLYSE ENZYMATIQUE) :

La solution à 40 % de polymère de glucose obtenue à l'exemple 1 a été soumise à l'action conjuguée de l'amyloglucosidase et de la glucose oxydase à raison de 25000 unités internationales d'amyloglucosidase (MARQUE AMIGASE[R] TS) commercialisée par GIST et de 6250 unités GOX de glucose oxydase SP 358.

Cette double action enzymatique s'est déroulée en cuve aérée à raison de 1,5 volume d'air par volume de solution par minute, à un pH régulé à 5,0 par addition progressive d'une solution de soude. On a laissé la réaction se poursuivre durant 60 heures mais il est quasiment certain que cette réaction était arrivée à terme bien avant cette durée.

Cette solution a été traitée comme dans le cas des exemples précédents sur la batterie d'échangeurs d'ions. A ce stade, la densité optique d'une solution à 40 % de matières sèches était de 0,135. Cette solution déminéralisée a été concentrée et atomisée pour fournir une poudre jaunâtre ne possédant qu'une très vague amertume.

L'analyse physico-chimique de la poudre obtenue était la suivante :

| Dextrose Equivalent | 6,9 |
|---|---|
| Glucose libre | traces |
| Mw | 1780 |
| Mn | 1000 |

## EXEMPLE 5 (PRODUIT SELON L'INVENTION AVEC HYDROGENATION CATALYTIQUE) :

On a procédé à l'hydrogénation de la solution de polymère purifié obtenu à l'exemple 4 par catalyse, à l'aide de nickel de Raney, sous une pression d'hydrogène de 50 bars à un pH de 7,0 et à une concentration de 40 % environ. Après filtration du catalyseur et élimination des sels sur résines cationiques et anioniques fortes, on a obtenu un sirop quasiment incolore de densité optique égale à 0,003 dans les conditions qui ont déjà été précisées ci-dessus. Après concentration et atomisation, on a obtenu une poudre blanche, sans odeur et sans aucune saveur, pas même sucrée révélant l'analyse suivante :

| Sucres réducteurs | 0,10 % |
|---|---|
| Sorbitol | traces |
| Mw | 1750 |
| Mn | 980 |

## EXEMPLE 6 :

Du polydextrose A de PFIZER (non déminéralisé), dont l'analyse chimique est la suivante (en pourcentage de la matière sèche) :

| Dextrose Equivalent | 8,7 |
|---|---|
| Glucose libre | 3,5 % |
| Glucose total | 85,8 % |
| Sorbitol libre | 1,7 % |
| Sorbitol total | 9,3 % |
| Acide citrique libre | 0,6 % |
| Acide citrique total | 1,1 % |
| Mw | 1740 |
| Mn | 775 |

est dissous dans de l'eau à une matière sèche de 30 %. La solution obtenue est jaune et elle est d'un goût amer et acide.

Quinze litres de la solution obtenue sont introduits dans un réacteur aéré, thermostaté, d'une contenance de 20 litres. Le pH de cette solution est ajusté à 5,6 par de la soude et la température est fixée à 35°C.

Le réacteur est agité à la vitesse de 1000 tours/minute et l'aération est fixée à 1,5 volume d'air par volume de solution et par minute puis, on ajoute 40 ml de solution enzymatique de glucose oxydase SP 358 de NOVO.

Après environ 90 minutes de réaction sous régulation du pH à 5,6, on chauffe le réacteur à 80°C pour détruire l'enzyme. La solution obtenue à ce stade est très colorée mais son goût amer est devenu moins perceptible. Son goût

EP 0 654 483 B1

acide est remplacé par un goût salé.

Cette solution a été déminéralisée sur une batterie de résines échangeuses d'ions identique à celle utilisée dans les exemples précédents et dans les mêmes conditions. On a obtenu une solution très peu colorée ne possédant qu'une discrète amertume. On a terminé le traitement à l'aide de noir granulaire CPG 1240 de CHEMVIRON, activé à la vapeur pour obtenir une solution absolument incolore de densité optique égale à 0,002. Après concentration puis atomisation de cette solution, on a obtenu une poudre complétement blanche et ne possédant aucune amertume et une saveur sucrée à peine perceptible.

Cette poudre a révélé l'analyse physico chimique suivante :

| | |
|---|---|
| D.E | 5,2 |
| Glucose libre | 0,1 % |
| Glucose Total | 89 % |
| Sorbitol libre | 1,8 % |
| Sorbitol total | 9,9 % |
| Acide citrique libre | 0 % |
| Acide citrique lié | 0 % |
| Mw | 1850 |
| Mn | 850 |

## EXEMPLE 7 :

Comparaison des propriétés physico-chimiques des produits selon l'invention et des produits de l'art antérieur.

a) Viscosité en solution aqueuse :

On a mesuré la viscosité des solutions aqueuses des produits obtenus aux exemples 1 à 6 et celle du polydextrose A. Cette mesure a été effectuée au viscosimètre BROOKFIELD à la température de 20°C sur des solutions aqueuses à 55 % de matières sèches.

On a mesuré les résultats suivants :

| | |
|---|---|
| Exemple 1 | 94 cps |
| Exemple 2 | 94 cps |
| Exemple 3 | 98 cps |
| Exemple 4 | 105 cps |
| Exemple 5 | 105 cps |
| Exemple 6 | 92 cps |
| Polydextrose A | 86 cps |

b) Humidité relative d'équilibre :

On a confectionné des bonbons à l'aide de 50 % de maltitol cristallisé de haute pureté de la marque MALTISORB[R] commercialisé par la Demanderesse et de 50 % des produits selon l'invention, obtenus aux exemples 4 et 5. Des bonbons témoins ont été confectionnés à l'aide de 50 % de maltitol et de 50 % du produit obtenu à l'exemple 2 et du polydextrose LITESSE[R] II. La cuisson des bonbons a été effectuée à la température de 160°C.

On a estimé l'hygroscopicité des bonbons obtenus par mesure de leur reprise en eau dans une atmosphère à 66 % d'humidité relative à 20°C après 1 et 7 jours.

On a obtenu les résultats suivants indiquant les pourcentages d'augmentation du poids des bonbons :

| Examples comparatifs : | |
|---|---|
| Exemple 2, après 1 jour<br>Exemple 2, après 7 jours<br>Polydextrose LITESSE$^R$ II, après 1 jour<br>Polydextrose LITESSE$^R$ II, après 7 jours | + 1,7 %<br>+ 5,5 %<br>+ 1,65 %<br>+ 5,02 % |
| Exemples selon l'invention : | |
| Exemple 4, après 1 jour<br>Exemple 4, après 7 jours<br>Exemple 5, après 1 jour<br>Exemple 5, après 7 jours | + 1,05 %<br>+ 3,15 %<br>+ 1,06 %<br>+ 3,20 % |

On constate que les bonbons fabriqués avec les produits selon l'invention sont beaucoup moins hygroscopiques que ceux fabriqués avec les produits de l'art antérieur et que leur humidité relative d'équilibre est plus élevée, ce qui facilite la conservation de ces bonbons. On note en outre en raison de la plus grande viscosité des produits selon l'invention que les bonbons qui en contiennent sont beaucoup moins sujets à la déformation à froid que les bonbons témoins. Ils colorent moins à la cuisson et ne possèdent pas de goût étranger à celui, sucré, du maltitol.

## Revendications

1.   Procédé de purification d'un polymère soluble hypocalorique du glucose caractérisé par le fait qu'il consiste à soumettre ledit polymère à l'action d'une glucose oxydase puis à traiter le produit obtenu par un échangeur d'anions de type resine anionique forte sous forme hydroxyle ou base forte OH⁻.

2.   Procédé selon la revendication 1 caractérisé par le fait qu'il consiste à soumettre le polymère soluble hypocalorique du glucose à l'action d'enzymes d'hydrolyse de l'amidon préalablement à sa purification, ou au cours du traitement à la glucose oxydase.

3.   Procédé selon la revendication 1 caractérisé par le fait qu'il consiste à soumettre le polymère soluble hypocalorique du glucose à une hydrogénation catalytique postérieurement à sa purification.

4.   Procédé de purification d'un polymère soluble hypocalorique du glucose selon les revendications 1, 2 ou 3, caractérisé par le fait qu'il consiste à soumettre le polymère soluble hypocalorique du glucose à l'action d'enzymes d'hydrolyse de l'amidon avant sa purification ou au cours de sa purification, et à soumettre le polymère soluble hypocalorique du glucose ainsi obtenu à une hydrogénation catalytique.

5.   Procédé selon les revendications 1 à 4 caractérisé par le fait que le polymère soluble hypocalorique du glucose est un polyglucose.

6.   Procédé selon les revendications 1 à 5 caractérisé par le fait que le polymère soluble hypocalorique du glucose est le polydextrose.

7.   Procédé selon les revendications 1 à 4 caractérisé par le fait que le polymère soluble hypocalorique du glucose est une pyrodextrine.

8.   Application du produit obtenu selon l'une des revendications 1 à 7 en tant que succédané du sucre pour la fabrication de bonbons.

9.   Application du produit obtenu selon l'une des revendications 1 à 7 en tant que substitut des matières grasses.

## Patentansprüche

1.   Verfahren zur Reinigung eines löslichen, hypokalorischen Polymers von Glucose, dadurch gekennzeichnet, daß es darin besteht, das genannte Polymer der Einwirkung einer Glucoseoxidase zu unterziehen und anschließend das erhaltene Produkt mit einem Anionenaustauscher vom Typ eines stark anionischen Harzes in der Form Hydroxyl oder der stark basischen Form OH⁻ zu behandeln.

2. Verfahren nach Anspruch 1, dadurch gekennzeichnet, daß es darin besteht, das lösliche, hypokalorische Polymer von Glucose vor seiner Reinigung oder im Verlauf der Behandlung mit der Glucoseoxidase der Einwirkung von Enzymen der Stärkehydrolyse zu unterziehen.

3. Verfahren nach Anspruch 1, dadurch gekennzeichnet, daß es darin besteht, das lösliche, hypokalorische Polymer von Glucose nach seiner Reinigung einer katalytischen Hydrierung zu unterziehen.

4. Verfahren zur Reinigung eines löslichen, hypokalorischen Polymers von Glucose nach Anspruch 1, 2 oder 3, dadurch gekennzeichnet, daß es darin besteht, das lösliche, hypokalorische Polymer von Glucose vor seiner Reinigung oder im Verlauf seiner Reinigung der Einwirkung von Enzymen der Stärkehydrolyse zu unterziehen und das auf diese Weise erhaltene lösliche, hypokalorische Polymer von Glucose einer katalytischen Hydrierung zu unterwerfen.

5. Verfahren nach Anspruch 1 bis 4, dadurch gekennzeichnet, daß das lösliche, hypokalorische Polymer von Glucose eine Polyglucose ist.

6. Verfahren nach Anspruch 1 bis 5, dadurch gekennzeichnet, daß das lösliche, hypokalorische Polymer von Glucose Polydextrose ist.

7. Verfahren nach Anspruch 1 bis 4, dadurch gekennzeichnet, daß das lösliche, hypokalorische Polymer von Glucose ein Pyrodextrin ist.

8. Verwendung des nach einem der Ansprüche 1 bis 7 erhaltenen Produktes als Ersatzstoff für Zucker bei der Herstellung von Bonbons.

9. Verwendung des nach einem der Ansprüche 1 bis 7 erhaltenen Produktes als Austauschstoff für Fette.

**Claims**

1. Process for the purification of a low-calorie soluble glucose polymer, characterized in that it consists in subjecting the said polymer to the action of a glucose oxidase and then in treating the product obtained with an anion exchanger of the strong anionic resin type in hydroxyl OH⁻ form.

2. Process according to claim 1, characterized in that it consists in subjecting the low-calorie soluble glucose polymer to the action of starch-hydrolysing enzymes prior to its purification, or during the treatment with glucose oxidase.

3. Process according to claim 1, characterized in that it consists in subjecting the low-calorie soluble glucose polymer to a catalytic hydrogenation subsequent to its purification.

4. Process for the purification of a low-calorie soluble glucose polymer according to claims 1, 2 or 3, characterized in that it consists in subjecting the low-calorie soluble glucose polymer to the action of starch-hydrolysing enzymes before its purification or during its purification, and in subjecting the low-calorie soluble glucose polymer thus obtained to a catalytic hydrogenation.

5. Process according to claims 1 to 4, characterized in that the low-calorie soluble glucose polymer is a polyglucose.

6. Process according to claims 1 to 5, characterized in that the low-calorie soluble glucose polymer is polydextrose.

7. Process according to claims 1 to 4, characterized in that the low-calorie soluble glucose polymer is a pyrodextrin.

8. Application of the product obtained according to one of claims 1 to 7 as a sugar substitute for the manufacture of confectionery sweets.

9. Application of the product obtained according to one of claims 1 to 7 as a substitute for fats.